# EUROPEAN PATENT SPECIFICATION

(11) **EP 3 082 133 B1**
(45) Date of publication and mention of the grant of the patent: **07.06.2023**
(21) Application number: 15290104.7
(22) Date of filing: 14.04.2015
(51) Int. Cl.: G21D 3/04, G21D 1/02, G21D 3/00

(54) **NUCLEAR INSTRUMENTATION AND CONTROL SYSTEM**
NUKLEARE INSTRUMENTE UND STEUERUNGSSYSTEM
SYSTÈME D'INSTRUMENTATION ET DE COMMANDE NUCLÉAIRE

(43) Date of publication of application: 19.10.2016
(73) Proprietor: General Electric Technology GmbH, 5400 Baden (CH)
(72) Inventor: Boudouda, Malik, 95800 Cordimanche (FR); Jacquot, Laetitia, 78540 Vernouillet (FR); Haddad, Walid, 92110 Clichy (FR)
(74) Representative: Wesela-Bauman, Grzegorz

(56) References cited:
- CN-A- 103 413 585
- CN-A- 103 852 259
- CN-U- 203 769 983
- US-A- 3 888 772
- US-B1- 6 292 523
- US-B1- 6 516 041

## Description

### TECHNICAL FIELD

The present invention generally relates to nuclear power plants, and more particularly to a nuclear Instrumentation and Control (I&C) system incorporated in the Emergency Diesel Generator (EDG) of the Nuclear Power Plants.

### PRIOR ART

Emergency Diesel Generators (EDGs) are essential part of the nuclear power plants, whose function is to provide emergency electrical power to critical equipment of the nuclear power plants in case of onsite, offsite events and/or in case when the power source becomes unavailable or degraded.

Generally, EDGs are located in a dedicated area of the nuclear power plant, and includes, along with various other components, an Instrumentation and Control (I&C) system incorporated therein. The I&C systems, such as, speed regulation, synchronous, relaying, Programmable Logical Controller (PLC)/Human machine Interface (HMI), polarity distributions, are important electrical auxiliaries of the EDGs in regard to the efficient operation of the EDGs.

Most of the present I&C systems in the nuclear power plants are based on analog technologies including analog electronic modules, electromagnetic relays etc. These analog technologies are quite a mature and compliant with severe requirements of safety applications in nuclear power plants. However, as such analog technologies based I&C systems become older, they may experience a higher failure rate with associated increased maintenance costs. The primary concern with the extended use of analog systems is effects of aging such as mechanical failures, environmental degradation, and obsolescence.

The technical solutions currently available on the market mainly count on digital technologies such as microprocessors, hardware, and software, PLC. Such digital technologies are essentially free of the drift that afflicts analog electronics, so the scale can be maintained better. However, these digital technologies are relatively new for I&C systems and are raising many technical and procedural issues, such as, the quantification of software reliability fault tolerance, self-testing, signal verification and validation, process system diagnostics etc.

Accordingly, there exists a need for entirely new approaches to achieve the required reliability, and, have a robust and flexible I&C system in terms of maintenance, reliability compactness in economical and effective manner.

CN 103413585 describes a digital out-of-pile nuclear measurement system based on a PC/104 bus. US 3888772 describes a nuclear reactor protection and safeguard system having a plurality of sensors for monitoring reactor and environmental parameters associated with reactor operation. CN 103852259 describes a mechanical overspeed protective device verification system of a nuclear power emergency meeting Diesel engine. A control system is connected to a motor and a lubricating system, controlling their operation. The control system includes a programmable computer. US 3888772 A describes the use of an electromechanical protection system comprising relays between nuclear sensors. US 6292523 B1 describes that a digital plant protection system may be equipped with mechanical relays. CN 203 769 983 U relates to an auxiliary fuel oil system for an emergency diesel generator set of a nuclear power plant.

### SUMMARY

The present disclosure discloses a nuclear Instrumentation and Control (I&C) system for an Emergency Diesel Generator (EDG) in the nuclear power plants that will be presented in the following simplified summary to provide a basic understanding of one or more aspects of the disclosure that are intended to overcome the discussed drawbacks, but to include all advantages thereof, along with providing some additional advantages. This summary is not an extensive overview of the disclosure. It is intended to neither identify key or critical elements of the disclosure, nor to delineate the scope of the present disclosure. Rather, the sole purpose of this summary is to present some concepts of the disclosure, its aspects and advantages in a simplified form as a prelude to the more detailed description that is presented hereinafter.

A general object of the present disclosure is to describe a nuclear I&C system that may be robust and flexible in terms of maintenance and reliability compactness. Further object of the present disclosure is to describe a nuclear I&C system that incorporates analog technologies, such as electromechanical relays, as well as digital technologies, such as Programmable Logic Controllers (PLCs) based on the classification of Safety and Non-safety functions of the nuclear I&C system.

In one aspect of the present disclosure, an Instrumentation and Control (I&C) system for Emergency Diesel Generator (EDG) of the nuclear power plants is provided. The I&C system is divided into parts, i.e., a first control part and a second control part. The first control part includes Safety I&C functions adapted to be controlled by wired logics based on electromechanical relays. Further, the second control part includes Non-safety I&C functions adapted to be controlled by Programmable Logic Controllers (PLCs)/ Human Machine Interface (HMI).

In accordance with an embodiment, the Safety I&C functions are related to availability and efficiency of EDG, which is at least one of an Emergency Starting/Stopping EDG, a Speed Control Unit, Excitations and Regulation Unit, Fuel Oil System, Lube Oil System, and Preheating and Cooling Water System. Further, the Non-safety I&C functions are related to indications, measuring and monitoring systems of EDG, which are at least one of Alarm Systems, Physical Measurement Systems, Non-Safety Electrical Protections, and Synchronization.

In accordance with an embodiment, the Safety and Non-safety functions are configured to include respective interface functions thereof, wherein the interface functions include respective input and outputs signals of the Safety and Non-safety functions.

In accordance with an embodiment, I&C system further includes a protection means to protect data exchanges between the first control part incorporating Safety I&C functions and second control part incorporating Non-safety I&C functions. In an embodiment, the protection means are based on physical separation in the form of a gap between classified circuits of the Safety and Non-safety I&C functions in the first and second control parts. In further embodiment, the protection means may be based on electrical insulation between the Safety and Non-safety I&C functions in the first and second control parts.

These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will be better understood with reference to the following detailed description and claims taken in conjunction with the accompanying drawing, wherein like elements are identified with like symbols, and in which:

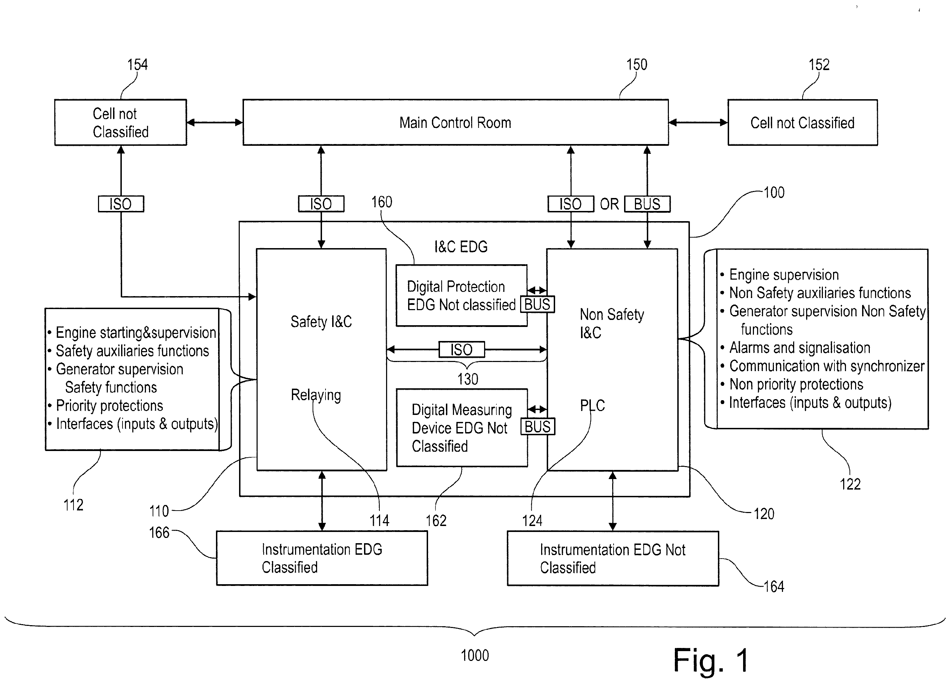

FIG. 1 illustrates a block diagram of Instrumentation and Control (I&C) system for Emergency Diesel Generator (EDG) of the nuclear power plants, in accordance with an exemplary embodiment of the present disclosure.

Like reference numerals refer to like parts throughout the description of several views of the drawings.

### DETAILED DESCRIPTION OF EXEMPLARY EMBODIMENTS

For a thorough understanding of the present disclosure, reference is to be made to the following detailed description, including the appended claims, in connection with the above-described drawings. In the following description, for purposes of explanation, numerous specific details are set forth in order to provide a thorough understanding of the present disclosure. It will be apparent, however, to one skilled in the art that the present disclosure can be practiced without these specific details. In other instances, structures and devices are shown in block diagrams form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

Although the following description contains many specifics for the purposes of illustration, anyone skilled in the art will appreciate that many variations and/or alterations to these details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure. Further, the relative terms used herein do not denote any order, elevation or importance, but rather are used to distinguish one element from another. Further, the terms "a," "an," and "plurality" herein do not denote a limitation of quantity, but rather denote the presence of at least one of the referenced item.

Referring to FIG. 1, an example block diagram of Instrumentation and Control (I&C) system 100 (hereinafter referred to as 'I&C system 100') for an Emergency Diesel Generator (EDG) 1000 of the nuclear power plants is illustrated in accordance with an exemplary embodiment of the present disclosure. In as much as the construction and arrangement of the I&C system 100, various associated elements may be well-known to those skilled in the art, it is not deemed necessary for purposes of acquiring an understanding of the present disclosure that there be recited herein all of the constructional details and explanation thereof. Rather, it is deemed sufficient to simply note that as shown in FIG. 1, in the I&C system 100, only those components are shown that are relevant for the description of various embodiments of the present disclosure.

As shown in FIG. 1, the I&C system 100 is adapted to be divided into parts, i.e., a first control part 110 and a second control part 120. The first control part 110 includes Safety I&C functions, as depicted in block 112, adapted to be controlled by wired logics based on electromechanical relays 114. Further, the second control part 120 includes Non-safety I&C functions, as depicted in block 122, adapted to be controlled by Programmable Logic Controllers (PLCs)/ Human Machine Interface (HMI) 124.

In accordance with an embodiment, as depicted in the block 112, the Safety I&C functions may be related to availability and efficiency of EDG, which may at least be one of an Engine Emergency Starting/Stopping system and supervision, a Speed Control Unit, an Excitations and Regulation Unit, Fuel Oil System, Lube Oil System, and Preheating and Cooling Water System, and Generator supervision safety and safety auxiliary functions etc.

Further the Non-safety I&C functions, as depicted in the block 122, may related to indications, measuring and monitoring systems of EDG, which may at least be one of Alarm and signalization Systems, Physical Measurement Systems, Non-Safety Electrical Protections, and Synchronization, etc.

In accordance with an embodiment, the Safety and Non-safety functions may be configured to include respective interface functions thereof, wherein the interface functions include respective input and outputs signals of each Safety and Non-safety functions.

In accordance with an embodiment, I&C system may further include a protection means, 130 to protect data exchanges between the first control part incorporating Safety I&C functions and second control part incorporating Non-safety I&C functions. In an embodiment, the protection means may be based on physical separation, such as specific gap 130, between classified circuits of the Safety and Non-safety I&C functions of the in the first and second control parts 110, 120. In further embodiment, the protection means may be based on electrical insulation (not shown) between the Safety and Non-safety I&C functions in the first and second control parts 110, 120.

The I&C system 100 is adapted to be communicably configured to various other units. For example, the first and second control parts 110, 120 relating to the Safety and Non-safety I&C functions are adapted and configured to communicate with a main control room 150, which is also in communication with various other non-classified units 152, 154. The second control part 120 may for example communicates with a non-classified Digital Protection EDG 160, a non-classified Digital Measuring Device EDG 162, and non-classified Instrumentation EDG 164. Similarly, the first control part 110 may for example communicates with non-classified Instrumentation EDG 166 and other non-classified unit 154. FIG. 1 is only an example block illustration of the I&C system 100, and the scope of the present disclosure should not be considered limiting in any sense to FIG. 1, which may include various modifications, arrangement or rearrangement as per the industry need and requirement.

The system 100 of the present disclosure is advantageous in various scopes such as described above. Further, the system is advantageous in incorporating analog technologies, such as electromechanical relays, as well as digital technologies, such as Programmable Logic Controllers (PLCs) based on the classification of Safety and Non-safety functions of the nuclear I&C system. The system economically and effectively provides robustness and flexibility in terms of maintenance and reliability compactness.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated.

### REFERENCE NUMERAL LIST

- 1000: Emergency Diesel Generator (EDG)
- 100: Instrumentation and Control system; I&C system
- 110: First control part
- 112: Block depicting Safety I&C functions
- 114: Electromechanical relays
- 120: Second control part
- 122: Block depicting Non-safety I&C functions
- 124: Programmable Logic Controllers (PLCs)/ Human Machine Interface (HMI)
- 130: Protection means, separation (gap), electrical insulations
- 150: Main control room
- 152, 154: Non-classified units
- 160: Non-classified Digital Protection EDG 160
- 162: Non-classified Digital Measuring Device EDG
- 164: Non-classified Instrumentation EDG
- 166: Non-classified Instrumentation EDG

## Claims

1. A Nuclear Instrumentation and Control system (100) for Emergency Diesel Generator (1000) of nuclear power plants, the Nuclear Instrumentation and Control system (100) being divided into a first control part (110) and a second control part (120) and comprising:
∘ a protection means (130),
∘ analog technologies in the form of electromechanical relays (114) and
∘ digital technologies in the form of Programmable Logic Controllers (124),
wherein said analog and digital technologies are based on the classification of Safety and Non-safety functions of the nuclear power plants, wherein:
• the first control part (110) incorporates Safety Instrumentation and Control functions (112) adapted to be controlled by wired logics based on electromechanical relays (114),
wherein the Safety Instrumentation and Control functions (112) are related to availability and efficiency of the Emergency Diesel Generator (1000), which is at least one of an Engine Emergency Starting/Stopping system and supervision, a Speed Control Unit, Excitations and Regulation Unit, Fuel Oil System, Lube Oil System, and Preheating and Cooling Water System, Generator supervision safety and safety auxiliary functions,
• the second control part (120) incorporates Non-safety Instrumentation and Control functions (122) adapted to be controlled by Programmable Logic Controllers (124)/ Human Machine Interface,
wherein the Non-safety Instrumentation and Control functions (122) are related to indications, measuring and monitoring systems of the Emergency Diesel Generator (1000), which is at least one of Alarm and signalization Systems, Physical Measurement Systems, Non-Safety Electrical Protections, and Synchronization, and
• the protection means (130) are configured to protect data exchanges between the first control part (110) incorporating Safety Instrumentation and Control functions (112) and the second control part (120) incorporating Non-safety functions, and wherein the protection means are based on physical separation in a form of a specific gap (130) between circuits classified as forming a part of the Safety Instrumentation and Control functions (112) in the first control part (110) or the Non-safety Instrumentation and Control functions (122) in the second control part (120), and
wherein the Safety and Non-safety functions are configured to include respective interface functions thereof, wherein the interface functions include respective input and outputs signals of the Safety and the Non-safety functions,
wherein the Nuclear Instrumentation and Control system (100) is adapted and configured to communicate to various other units of nuclear power plants.

2. The Nuclear Instrumentation and Control system (100) as claimed in claim 1, **wherein** the protection means (130) are based on electrical insulation between the Safety Instrumentation and Control functions (112) in the first control part (110) and the Non-safety Instrumentation and Control functions (122) in the second control part (120),
wherein the electrical insulation is realized by Optocouplers, interface relays, converters, transformers, fuses and a plurality of power supplies.

## Patentansprüche

1. Nukleares Instrumentierungs- und Steuerungssystem (100) für einen Notstromdieselgenerator (1000) von Kernkraftwerken, wobei das nukleare Instrumentierungs- und Steuerungssystem (100) in einen ersten Steuerteil (110) und einen zweiten Steuerteil (120) unterteilt ist und Folgendes umfasst:
∘ ein Schutzmittel (130),
∘ analoge Technologien in Form von elektromechanischen Relais (114) und
∘ digitale Technologien in Form von speicherprogrammierbaren Steuerungen (124),
wobei die analogen und digitalen Technologien auf der Klassifizierung von sicherheitskritischen und nicht-sicherheitskritischen Funktionen der Kernkraftwerke basieren, wobei:
• das erste Steuerteil (110) sicherheitskritische Instrumentierungs- und Steuerfunktionen (112) beinhaltet, die angepasst sind, um durch drahtgebundene Logik basierend auf elektromechanischen Relais (114) gesteuert zu werden,
wobei die sicherheitskritischen Instrumentierungs- und Steuerfunktionen (112) mit der Verfügbarkeit und Effizienz des Notstromdieselgenerators (1000) verbunden sind, der mindestens eines von einem Motor-Notstart-/Stoppsystem und einer Überwachung, einer Geschwindigkeitssteuereinheit, einer Erregungs- und Regeleinheit, einem Kraftstoffölsystem, einem Schmierölsystem und einem Vorerwärmungs- und Kühlwassersystem, Generatorüberwachungssicherheits- und Sicherheitshilfsfunktionen ist,
• das zweite Steuerteil (120) nicht-sicherheitskritische Instrumentierungs- und Steuerfunktionen (122) beinhaltet, die angepasst sind, um durch speicherprogrammierbare Steuerungen (124)/Mensch-Maschine-Schnittstelle gesteuert zu werden,
wobei die nicht-sicherheitskritischen Instrumentations- und Steuerfunktionen (122) sich auf Anzeigen, Mess- und Überwachungssysteme des Notstromdieselgenerators (1000) beziehen, die mindestens eines von Alarm- und Signalisierungssystemen, physikalischen Messsystemen, nicht-sicherheitskritischen elektrischen Schutzeinrichtungen und Synchronisation sind, und
• die Schutzmittel (130) konfiguriert sind, um Datenaustausche zwischen dem ersten Steuerteil (110), das sicherheitskritische Instrumentierungs- und Steuerfunktionen (112) beinhaltet, und dem zweiten Steuerteil (120), das nicht-sicherheitskritische Funktionen beinhaltet, zu schützen, und wobei die Schutzmittel auf einer physischen Trennung in einer Form einer spezifischen Lücke (130) zwischen Schaltkreisen basieren, die als einen Teil der sicherheitskritischen Instrumentierungs- und Steuerfunktionen (112) in dem ersten Steuerteil (110) oder der nicht-sicherheitskritischen Instrumentierungs- und Steuerfunktionen (122) in dem zweiten Steuerteil (120) bildend klassifiziert sind, und
wobei die sicherheitskritischen und nicht-sicherheitskritischen Funktionen konfiguriert sind, um jeweilige Schnittstellenfunktionen davon einzuschließen, wobei die Schnittstellenfunktionen jeweilige Eingangs- und Ausgangssignale der sicherheitskritischen und nicht-sicherheitskritischen Funktionen einschließen,
wobei das nukleare Instrumentierungs- und Steuerungssystem (100) angepasst und konfiguriert ist, um mit verschiedenen anderen Einheiten von Kernkraftwerken zu kommunizieren.

2. Nukleares Instrumentierungs- und Steuerungssystem (100) nach Anspruch 1, **wobei** die Schutzmittel (130) auf einer elektrischen Isolierung zwischen den sicherheitskritischen Instrumentierungs- und Steuerfunktionen (112) in dem ersten Steuerteil (110) und den nicht-sicherheitskritischen Instrumentierungs- und Steuerfunktionen (122) in dem zweiten Steuerteil (120) basieren,
wobei die elektrische Isolierung durch Optokoppler, Schnittstellenrelais, Wandler, Transformatoren, Sicherungen und eine Vielzahl von Stromversorgungen realisiert wird.

## Revendications

1. Système d'instrumentation et de commande nucléaire (100) destiné au générateur diesel d'urgence (1000) de centrales nucléaires, le système d'instrumentation et de commande nucléaire (100) étant divisé en une première partie de commande (110) et une seconde partie de commande (120) et comprenant :
o un moyen de protection (130),
o des technologies analogiques sous forme de relais électromécaniques (114) et
o des technologies numériques sous forme d'automates programmables (124),
dans lequel lesdites technologies analogiques et numériques sont basées sur le classement de fonctions de sécurité et de non-sécurité des centrales nucléaires, dans lequel :
• la première partie de commande (110) incorpore des fonctions d'instrumentation et de commande de sécurité (112) adaptées pour être commandées par des logiques filaires sur la base des relais électromécaniques (114),
dans lequel les fonctions d'instrumentation et de commande de sécurité (112) sont liées à une disponibilité et à une efficacité du générateur diesel d'urgence (1000), qui est au moins l'un parmi un système de démarrage/arrêt d'urgence de moteur et une supervision, une unité de commande de vitesse, une unité de régulation et d'excitations, un circuit d'alimentation en carburant, un système d'huile lubrifiante, et un système d'eau de pré-chauffage et de refroidissement, des fonctions auxiliaires de sécurité et de sécurité de supervision de générateur,
• la seconde partie de commande (120) incorpore des fonctions d'instrumentation et de commande de non-sécurité (122) adaptées pour être commandées par des automates programmables (124)/interface homme-machine,
dans lequel les fonctions d'instrumentation et de commande de non-sécurité (122) sont liées à des indications, des systèmes de mesure et de surveillance du générateur diesel d'urgence (1000), qui est au moins l'un parmi des systèmes d'alarme et de signalisation, des systèmes de mesure physique, des protections électriques de non-sécurité et une synchronisation, et
• le moyen de protection (130) est configuré pour protéger les échanges de données entre la première partie de commande (110) incorporant des fonctions d'instrumentation et de commande de sécurité (112) et la seconde partie de commande (120) incorporant des fonctions de non-sécurité, et dans lequel le moyen de protection est basé sur une séparation physique sous forme d'un espace spécifique (130) entre des circuits classés comme formant une partie des fonctions d'instrumentation et de commande de sécurité (112) dans la première partie de commande (110) ou des fonctions d'instrumentation et de commande de non-sécurité (122) dans la seconde partie de commande (120), et
dans lequel les fonctions de sécurité et de non-sécurité sont configurées pour inclure des fonctions d'interface respectives de celles-ci, dans lequel les fonctions d'interface comportent des signaux d'entrée et de sorties respectifs des fonctions de sécurité et de non-sécurité,
dans lequel le système d'instrumentation et de commande nucléaire (100) est adapté et configuré pour communiquer à diverses autres unités de centrales nucléaires.

2. Système d'instrumentation et de commande nucléaire (100) selon la revendication 1, **dans lequel** le moyen de protection (130) est basé sur une isolation électrique entre les fonctions d'instrumentation et de commande de sécurité (112) dans la première partie de commande (110) et les fonctions d'instrumentation et de commande de non-sécurité (122) dans la seconde partie de commande (120),
dans lequel l'isolation électrique est réalisée par des optocoupleurs, des relais d'interface, des convertisseurs, des transformateurs, des fusibles et une pluralité de blocs d'alimentation.
